# EUROPÄISCHE PATENTSCHRIFT

(11) **EP 1 023 945 B1**
(45) Veröffentlichungstag und Bekanntmachung des Hinweises auf die Patenterteilung: **07.08.2002**
(21) Anmeldenummer: 99101436.6
(22) Anmeldetag: 27.01.1999
(51) Int. Cl.: B03B 9/06, B29B 17/02, B07B 9/00

(54) **Verfahren und Einrichtung zum Sortieren eines Abfallgemisches**
Method and device for sorting a waste mixture
Procédé et dispositif pour trier un mélange de déchets

(43) Veröffentlichungstag der Anmeldung: 02.08.2000
(73) Patentinhaber: Isis GmbH Servicegesellschaft für Planung und Instandhaltung von Entsorgungs- und Industrieanlagen, 41061 Mönchengladbach (DE)
(72) Erfinder: Hüskens, Jürgen, 41748 Viersen (DE); Dell, Thomas, 52428 Jülich (DE); Jauer, Hermann, 40699 Erkrath (DE); Steinhauer, Johannes, 41469 Neuss (DE)
(74) Vertreter: Sparing, Rolf Klaus

(56) Entgegenhaltungen:
- EP-A- 0 530 934
- DE-A- 4 414 112
- DE-U- 29 722 242
- DE-U- 29 800 229

## Beschreibung

Die vorliegende Erfindung betrifft ein Verfahren und eine Einrichtung zum Sortieren eines Abfallgemisches nach dem Oberbegriff des Anspruchs 1 bzw. des Anspruchs 7.

Aus der DE-A-198 00 521 (bzw. siehefauch DE-U-297 22 242) ist ein Verfahren und eine Einrichtung zum Sortieren eines Abfallgemisches bekannt, bei dem bzw. bei der das Abfallgemisch mittels Sieben zur Auftrennung in eine Grobfraktion, eine Mittelfraktion und eine Feinfraktion unterschiedlicher Korngröße aufgespalten wird. Hierbei wird die Mittelfraktion mittels Windsichtung weiter aufgespaltet in Leichtgut und in Schwergut. Das Schwergut und die Feinfraktion werden dann strangweise mittels automatischer Sortierer sortiert, wobei zunächst eine Fraktion bestehend aus Getränkekartons und NE-Metallen mittels eines NE-Scheiders aus dem Schwergut aussortiert wird und dann eine Trennung in Wert- und in Störstoffe erfolgt und die Feinfraktion vor ihrer Sortierung nochmals gesiebt und gesichtet wird.

Aufgabe der vorliegenden Erfindung ist es, ein Verfahren und eine Einrichtung nach dem Oberbegriff des Anspruchs 1 bzw. des Anspruchs 7 zu schaffen, mit dem bzw. der Schwergutfraktionen aus dem Schwergut und Sortierfraktionen aus der Feinfraktion in möglichst effizienter Weise aussortiert werden können und eine kompakte Bauweise eines Sortierstranges ermöglicht wird.

Diese Aufgabe wird durch ein Verfahren mit den Merkmalen des Anspruchs 1 bzw. durch eine Einrichtung mit den Merkmalen des Anspruchs 7 gelöst.

Auf diese Weise lassen sich aus dem Schwergut bereits nach dem Windsichten Schwergutfraktionen und bereits aus der Feinfraktion Sortierfraktionen in hoher Qualität mit baulich kompakten Sortiersträngen gewinnen.

Die Siebstufe zur Erzeugung der Grob-, Mittel- und Feinfraktion wird vorteilhaft durch zwei hintereinander geschaltete Siebe ausgebildet. Der erste Siebschnitt liegt bevorzugt in einem Bereich von 180 bis 320 mm, besonders bevorzugt in einem Bereich von 200 bis 260 mm, um relativ grobstückige Abfallobjekte frühzeitig und weitgehend vollständig abtrennen zu können. Der zweite Siebschnitt liegt bevorzugt in einem Bereich von 80 bis 160mm, besonders bevorzugt in einem Bereich von 100 bis 150 mm, wobei man hierbei eine sehr günstige Aufspaltung betreffend das Mengenverhältnis von Mittel- und Feinfraktion erhält.

Die Abfallobjekte werden besonders zuverlässig und schnell mit Erkennungseinrichtungen erkannt, die mittels NIR-Spektroskopie und/oder Bilderkennung arbeiten. Bei Vorsehen pneumatischer Austragssysteme lassen sich erkannte Abfallobjekte mit hohen Ausbringraten aus dem Abfallgemisch abtrennen und in einfacher Weise auf nebengeordnete Fördervorrichtungen (zum Abtransport) übergeben.

Wird einem Sortierer ein Sichter und/oder ein Sieb nachgeschaltet, lassen sich aus den aussortierten Schwergutfraktionen folienartige Leichtstoffe und feinteilige Störstoffe und aus den aussortierten Sortierfraktionen kleinteiliges Feingut und folienartiges Leichtgut - individuell dem jeweiligen Strom angepaßt - auf einfache Weise abtrennen.

Ist bei zwei hintereinander geschalteten Sortieren zwischen der die Abfallobjekte aufnehmenden Förderfläche des Förderbandes des ersten Sortierers und der die Abfallobjekte aufnehmenden Förderfläche des Förderbandes des zweiten Sortierers ein vertikaler Abstand von 50 bis 450 mm, bevorzugt 50 bis 300 mm vorgesehen, läßt sich der Förderweg zur Erkennungseinrichtung des zweiten Sortierers besonders kurz ausbilden, und trotzdem eine Ruhelage der Abfallobjekte beim Vorbeifahren an der Erkennungseinrichtung gewährleisten.

Ein Sortierstrang, bestehend aus mehreren hintereinander geschalteten Sortierern, zwischen denen die Fallhöhe von Förderfläche zu Förderfläche in dem Bereich von 50 bis 450 mm, bevorzugt von 50 bis 300 mm liegt, läßt sich besonders vorteilhaft in bereits vorhandene Sortieranlagen aufgrund seiner kompakten Bauweise einsetzen bzw. nachrüsten, wobei er kostenintensive manuelle Sortierplätze an einem zumeist bis zu 15 m langen Sortierband ersetzen kann.
Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt eine schematische Darstellung einer Einrichtung zum Sortieren eines Abfallgemisches.
Fig. 2 zeigt ausschnittsweise schematisch einen Sortierstrang mit zwei Sortierern.

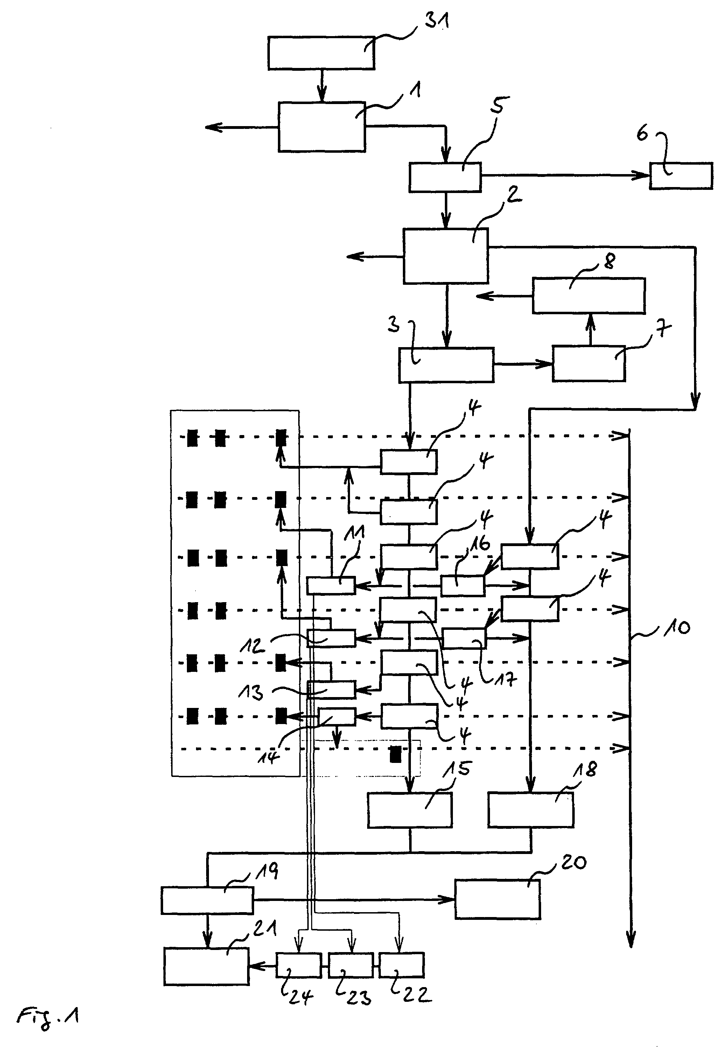

Die in Fig. 1 dargestellte Einrichtung umfaßt eine Siebstufe, die durch ein erstes Trommelsieb 1 und ein zweites Trommelsieb 2 ausgebildet ist, einem dem zweiten Trommelsieb 2 nachgeordneten Windsichter 3 sowie in zwei Strängen hintereinander geschaltete Sortierer 4.

Dem ersten Trommelsieb 1 ist ein Sackaufreißer 31 vorgeschaltet.

Der Sieblochdurchmesser des ersten Trommelsiebes 1 beträgt in etwa 250 mm und der Sieblochdurchmesser des zweiten Trommelsiebes 2 beträgt in etwa 130 mm. Zwischen das erste Trommelsieb 1 und das zweite Trommelsieb 2 ist ein Fe-Abscheider 5 geschaltet, der mit einem Fe-Sammelbehälter 6 verbunden ist.

Dem Windsichter 3 ist an der Ausgangsseite des Leichtgutes ein Kombiabscheider 7 nachgeschaltet, welchem eine Hammermühle 8 nachgeordnet ist.

Dem Windsichter 3 ist an der Ausgangsseite des Schwergutes ein erster Sortierstrang mit sechs hintereinander geschalteten Sortierern 4 nachgeordnet. Die ersten beiden Sortierer 4 sind zum Aussortieren von Getränkekartons vorgesehen, wobei eine Übergabe der von dem zweiten Sortierer 4 aussortierten Getränkekartons auf das Abführband des ersten Sortierers 4 vorgesehen ist. Dem Abführband des ersten Sortierers 4 ist ein Bunker einer Lesebühne-/Bunkereinheit 9 zugeordnet.

Die Lesebühne-/Bunkereinheit 9 umfaßt mehrere Bunker für die fertig aussortierten und ggf. nachbehandelten Schwergut- und Sortierfraktionen. Die einzelnen Bunker sind über Förderaggregate (Strichlinien) mit einem zu einer Ballenpresse (nicht dargestellt) führenden Förderband 10 verbunden.

Dem dritten und dem vierten Sortierer 4 für PE bzw. PP in dem ersten Strang ist jeweils ein Windsichter 11, 12 für die jeweils aussortierte Schwergutfraktion nachgeschaltet. Die Windsichter 11, 12 sind jeweils über ein Abführband mit der Lesebühne/Bunkereinheit 9 verbunden.

Dem fünften Sortierer 4 für PET ist ein mit Durchlichterkennung arbeitendes Sortiergerät 13 für die aussortierte PET-Schwergutfraktion nachgeordnet. Mit Sortiergerät 13 lassen sich unterschiedlich gefärbte PET-Sorten trennen. Das Sortiergerät 13 ist wiederum mit der Lesebühne-/Bunkereinheit 9 verbunden.

Dem sechsten Sortierer 4 für Papier, Pappe, Kartonagen (PPK) ist ein NE-Abscheider 14 für die aussortierte PPK-Schwergutfraktion nachgeordnet. Der NE-Abscheider 14 ist mit der Lesebühne-/Bunkereinheit 9 verbunden.

Dem sechsten Sortierer 4 für PPK ist zum Ende des ersten Stranges ein weiterer NE-Abscheider 15 nachgeordnet.

Nach dem zweiten Trommelsieb 2 ist, der Austragsseite der Feinfraktion folgend, ein zweiter Strang von zwei hintereinander geschalteten Sortierern 4 vorgesehen.

Dem ersten und dem zweiten Sortierer 4 des zweiten Stranges für die PE- bzw. PP-Sortierfraktion ist jeweils ein Sieb 16, 17 für die jeweils aussortierten PE- bzw. PP-Sortierfraktion nachgeschaltet. Das Sieb 16 ist über einen Förderer (nicht dargestellt) mit dem Windsichter 11 und das Sieb 17 ist über einen Förderer (nicht dargestellt) mit dem Windsichter 12 überlaufseitig verbunden. Zur Rückführung des Unterlaufs von Sieb 16 ist eine Übergabe zu dem zweiten Sortierer 4 für die PP-Sortierfraktion vorgesehen. Das Sieb 17 ist unterlaufseitig mit dem Förderer (nicht dargestellt) verbunden, der das den zweiten Sortierer 4 verlassende Abfallgemisch befördert.

Dem zweiten Sortierer 4 in dem zweiten Strang ist ein NE-Abscheider 18 nachgeordnet.

Der NE-Abscheider 15 und der NE-Abscheider 18 sind über ein (nicht dargestelltes) Förderband mit einem weiteren Sortierer 19 verbunden.

Dem Sortierer 19 ist ein Restebehälter 20 und ein Mischkunststoffsammelbehälter 21 zugeordnet.

Dem Windsichter 11 ist ein PE-Behälter 22, dem Windsichter 12 ist ein PP-Behälter 23 und dem Sortiergerät 13 ist ein Sammelbehälter 24 für trübes PET zugeordnet. Die Behälter 22, 23 und 24 sind über Förderer (nicht dargestellt) mit dem Mischkunststoffsammelbehälter 21 verbunden. Die Behälter 22, 23 sind als Kombiabscheider ausgebildet, in welchen eine Trennung des Leichtgutes von der Transportluft erfolgt.

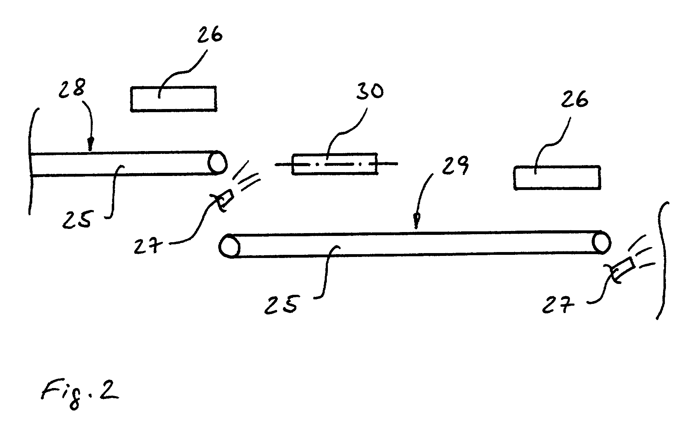

Der in Fig. 2 ausschnittsweise dargestellte Sortierstrang umfaßt zwei hintereinander geschaltete Sortierer 4. Jeder Sortierer 4 weist ein Förderband 25 mit einer Erkennungseinrichtung 26 und einer pneumatischen Austragsvorrichtung 27 auf. Die Erkennungseinrichtungen 26 sind jeweils im Endbereich an dem stromabwärts liegenden Ende oberhalb des Förderbandes 25 auf die die Abfallobjekte aufnehmenden Förderflächen 28 bzw. 29 blickend angeordnet.
Oberhalb des Förderbandes 25 des zweiten, dem ersten Sortierer 4 nachgeschalteten Sortierers.4 ist ein Aufnahmeband 30 zur Aufnahme und Beförderung aussortierter Abfallobjekte quer zur Förderrichtung angeordnet. Zwischen der Förderfläche 28 des ersten Förderbandes 25 und der Förderfläche 29 des nachgeschalteten Förderbandes 25 ist ein Abstand von 250 mm vorgesehen. Die Förderfläche 29 liegt in vertikaler Richtung unterhalb der Ebene der Förderfläche 28.
In dem zwischen den Ebenen der Förderflächen 28 und 29 ausgebildeten Raum ist die Austragsvorrichtung 27 in Richtung auf das Aufnahmeband 30 blasend angeordnet.

Zum Sortieren eines Abfallgemisches wird der Abfall zunächst über den Sackaufreißer 31 - sofern in Gebinden angeliefert - offen gelegt und in das erste Trommelsieb 1 gefahren und in die Grobfraktion mit Abfallobjekten in etwa größer 250 mm abgetrennt. Die verbleibende Fraktion wird mittels des Fe-Abscheiders 5 von Fe-haltigen Abfallobjekten befreit, die in den Fe-Sammelbehälter 6 gelangen.
Die nunmehr verbleibende Fraktion wird in dem zweiten Trommelsieb 2 in eine Feinfraktion in etwa kleiner 130 mm und in eine Mittelfraktion in etwa 130 bis 250 mm aufgespalten.

Die Mittelfraktion gelangt in den Windsichter 3 und wird in Schwergut und in Leichtgut aufgespalten. Das Leichtgut wird in dem Kombiabscheider 7 von Luft getrennt und anschlließend in der Hammermühle 8 selektiv zerkleinert. Hierbei behalten elastische Abfallobjekte vorteilhaft weitgehend ihre Korngröße und werden sprödere Abfallobjekte in ihrer Korngröße reduziert, was eine spätere Abtrennung von Folien erleichtert.

Das Schwergut aus Windsichter 3 gelangt zu dem ersten Sortierstrang und dem ersten Sortierer 4, welcher Getränkekartons abtrennt. Der nach dem ersten Sortierer 4 verbleibende Abfallstrom wird in einer ballistischen Kurve auf das Förderband 25 des zweiten Sortierers 4 übergeben, wobei die einzelnen Abfallobjekte gewissermaßen auf dem Förderband 25 gegenüber ihrer vorherigen Lage vorteilhaft neu verteilt werden. Hierdurch wird es beispielsweise ermöglicht, bisher verdeckte Getränkekartons für eine Erkennung erst sichtbar zu machen.
Von dem zweiten Sortierer 4 werden dann Getränkekartons abgetrennt, die den ersten Sortierer 4 ggf. passiert haben.
Anschließend gelangt das Abfallgemisch in den dritten Sortierer 4, von dem die PE-Schwergutfraktion aussortiert wird. Die aussortierte PE-Schwergutfraktion wird in dem Windsichter 11 von folienartigen Leichtstoffen befreit, die in den PE-Behälter 22 gefördert werden. Die derart nachbehandelte PE-Schwergutfraktion wird dann in einen Bunker der Lesebühne-/Bunkereinheit 9 gefördert.

Danach gelangt das Abfallgemisch in den vierten Sortierer 4, von dem die PP-Schwergutfraktion aussortiert wird. Die aussortierte PP-Schwergutfraktion wird in dem Windsichter 12 von folienartigen Leichtstoffen befreit, die in den PP-Behälter 23 gefördert werden. Die derart nachbehandelte PP-Schwergutfraktion wird dann in einen Bunker der Lesebühne-/Bunkereinheit 9 gefördert.

Anschließend wird von dem fünften Sortierer 4 die PET-Schwergutfraktion aussortiert und von dem Sortiergerät 13 mittels Durchlichterkennung weiter in transparentes und trübes PET aufgespalten. Das transparente PET wird in einen Bunker der Lesebühne-/Bunkereinheit 9 und das trübe PET in den Sammelbehälter 24 transportiert. Anstelle der Sortierung mit Sortiergerät 13 kann auch eine Windsichtung vorgesehen werden, die dann Leichtstoffe abtrennt und es bei einer Mischung aus transparentem und trübem bzw. gefärbtem PET beläßt. Anstelle einer Sortierung mit Sortiergerät 13 oder einer Windsichtung kann auch keine weitere Behandlung erfolgen und eine direkte thermische Verwertung der PET-Schwergutfraktion vorgenommen werden.

Als letzter Sortierschritt in dem ersten Sortierstrang ist dann in dem sechsten Sortierer 4 das Aussortieren von PPK (Papier, Pappe, Kartonagen) vorgesehen. Die aussortierte PPK-Schwergutfraktion wird dann in dem NE-Abscheider 14 von NEhaltigen Abfallobjekten befreit und gelangt dann in einen Bunker der Lesebühne/Bunkereinheit 9.

Nach dem Durchlaufen der sechs Sortierer 4 gelangt dann das verbleibende Abfallgemisch über den NE-Abscheider 15 zusammen mit dem nach dem zweiten Sortierstrang und dem NE-Abscheider 18 verbleibenden Abfallgemisch in den Sortierer 19, der Mischkunststoffe wie PS, PP, PU, PVC, PET u. a. aussortiert, die von den vorgeschalteten Sortierern 4 nicht abgetrennt wurden.

Die aus dem zweiten Trommelsieb 2 stammende Feinfraktion wird zu dem ersten Sortierer 4 des zweiten Sortierstranges gefördert. Von dem ersten Sortierer 4 wird die PE-Sortierfraktion aussortiert und in dem Sieb 16 von kleinteiligen Störstoffen befreit. Die gesiebte PE-Sortierfraktion wird dann in den Windsichter 11 geleitet und dort zusammen mit der PE-Schwergutfraktion des ersten Sortierstranges gesichtet und von folienartigen Leichtstoffen befreit.

Nach Durchlaufen des ersten Sortierers 4 gelangt dann die Feinfraktion in den zweiten Sortierer 4, von dem die PP-Sortierfraktion aussortiert wird. Die aussortierte PP-Sortierfraktion wird anschließend in Sieb 17 von kleinteiligen Störstoffen befreit und in den Windsichter 12 geleitet und dort zusammen mit der PP-Schwergutfraktion des ersten Sortierstranges gesichtet und von folienartigen Leichtstoffen befreit.

Bei den vorgenannten Sortiervorgängen werden die Abfallobjekte von einem Sortierer 4 auf einen nachgeschalteten Sortierer 4 auf eine bestimmte Art und Weise übergeben, die es erlaubt, relativ kurz bauende Sortierkaskaden vorzusehen und trotzdem die einzelnen Abfallobjekte quasi in Ruhelage an den Erkennungseinrichtungen 26 auf den Förderbändern 25 vorbeizuführen.

Hierbei werden die mittels NIR und/oder Bilderkennung erkannten Abfallobjekte von der jeweiligen Austragsvorrichtung 27 angeblasen und in flachem Bogen auf die jeweiligen Aufnahmebänder 30 geschossen. Die nicht als zu einer Schwergut- oder Sortierfraktion gehörend erkannten Abfallobjekte werden in einem flachen Bogen von der einen Förderfläche 28 auf die jeweils nachgeschaltete Förderfläche 29 abgeworfen, so daß sie relativ kurzfristig wieder eine Ruhelage bezogen auf das Förderband 25 einnehmen. Auf diese Weise lassen sich relativ kurze Vorlauflängen der Förderbänder 25 bis zu den Erkennungseinrichtungen 26 erreichen und damit auch ein nachträglicher Einbau derartiger Sortierkaskaden in vorhandene Sortieranlagen realisieren.
Mit Fördergeschwindigkeiten der Förderbänder 25 von in etwa 1,5 bis 3 m/sec., bevorzugt 1,8 bis 2,6 m/sec. werden besonders günstige ballistische Flugbahnen der Abfallobjekte bei deren Übergabe auf ein nachgeschaltetes Förderband erreicht.

In einer besonders vorteilhaften Ausgestaltung der Einrichtung ist das jeweilige einem Sortierer 4 zugeordnete Aufnahmeband 30 in etwa auf Höhe oder in geringem Abstand von etwa 100 mm oberhalb bis 50 mm unterhalb der Ebene der jeweils vorgeschalteten Förderfläche 28 angeordnet.

Zur Aufnahme der mittels der Sortierer 4 aussortierten und durch Sichtung bzw. Siebung nachbehandelten Schwergut- und Sortierfraktionen können auch einfache Bunker und Behälter vorgesehen werden. Bei dem vorstehend beschriebenen Ausführungsbeispiel ist die Lesebühne-/Bunkereinheit 9 mit derartigen Bunkern ausgestattet. Aufgrund der automatischen Sortierung spielt ein manuelles Sortieren an einer Lesebühne für die vorliegende Erfindung nur eine untergeordnete Rolle, in der Weise, daß lediglich eine Nachkontrolle ermöglicht wird.

In Abwandlung des vorstehend beschriebenen Ausführungsbeispiels kann das Sortiergerät 13 auch zusätzlich oder alternativ zur Durchlichterkennung mit einem System zur Formerkennung der PET-Abfallobjekte ausgestattet sein.
Ferner kann anstelle der Sortierung der PET-Schwergutfraktion in trübes und transparentes PET auch eine Sortierung nach Formgebung, wie nach Flaschen, Schalen usw. und/oder Farbe vorgesehen werden.
Zur feineren Sortierung der Feinfraktion und Schaffung weiterer Wertstoffe können den Sortierern 4 für die PE- und PP-Sortierfraktionen des zweiten Sortierstranges weitere Sortierer 4 nachgeschaltet werden, die beispielsweise PS, Getränkekartons u. a. aussortieren.

## Patentansprüche

1. Verfahren zum Sortieren eines Abfallgemisches, bei dem das Abfallgemisch mittels Sieben zur Auftrennung in eine Grobfraktion, eine Mittelfraktion und eine Feinfraktion aufgespalten wird, die Mittelfraktion mittels Windsichten in Leichtgut und in Schwergut aufgetrennt und in einem ersten Strang das Schwergut in Schwergutfraktionen und in einem zweiten Strang die Feinfraktion in Sortierfraktionen sortiert werden, **dadurch gekennzeichnet, daß** aus dem Schwergut stufenweise nacheinander anfangs die Schwergutfraktionen Getränkekartons, PE, PP, PET und zuletzt die Schwergutfraktion PPK und Mischkunststoffe und aus der Feinfraktion stufenweise nacheinander PE und PP mittels automatischer strangweise hintereinander geschalteter Sortierer aussortiert werden, wobei nicht aussortierte Abfallobjekte des Schwergutes und der Feinfraktion von dem jeweiligen Sortierer auf einen nachgeschalteten Sortierer mit einer Fallhöhe von 50 bis 450 mm abgeworfen werden.

2. Verfahren nach Anspruch 1, **dadurch gekennzeichnet, daß** das Abfallgemisch mit einer ersten Sieblochgröße im Bereich von 180 bis 320 mm und einer zweiten Sieblochgröße im Bereich von 80 bis 160 mm aufgespalten wird.

3. Verfahren nach Anspruch 1 oder 2, **dadurch gekennzeichnet, daß** die Abfallobjekte der Schwergutfraktionen und der Sortierfraktionen mittels NIR-Spektroskopie und/oder Bilderkennung identifiziert und mittels pneumatischer Austragung in den Sortierern aussortiert werden.

4. Verfahren nach einem der Ansprüche 1 bis 3, **dadurch gekennzeichnet, daß** die Abfallobjekte der Schwergutfraktionen PE und PP zur Abscheidung von folienartigen Leichtstoffen in Sichtern gesichtet und ggf. anschließend zur Abscheidung von feinteiligen Störstoffen in Sieben gesiebt werden.

5. Verfahren nach einem der Ansprüche 1 bis 4, **dadurch gekennzeichnet, daß** die Abfallobjekte der Sortierfraktionen PE und PP zunächst zur Abscheidung von kleinteiligen Feingut in weiteren Sieben gesiebt und anschließend zur Abscheidung von Leichtstoffen in Sichtem gesichtet werden.

6. Verfahren nach Anspruch 4 und 5, **dadurch gekennzeichnet, daß** materialgleiche Sortierfraktionen und Schwergutfraktionen gemeinsam in jeweils einen Sichter geleitet werden.

7. Einrichtung zum Sortieren eines Abfallgemisches mit einer Siebstufe (1, 2) zur Aufspaltung des Abfallgemisches in eine Grobfraktion, eine Mittelfraktion und eine Feinfraktion, einem Windsichter (3) zur Auftrennung der Mittelfraktion in Leichtgut und in Schwergut und hintereinander geschalteten Sortieren (4) zum Aussortieren von Schwergutfraktionen aus dem Schwergut und hintereinander geschalteten Sortierern (4) zum Aussortieren von Sortierfraktionen aus der Feinfraktion, wobei jeder Sortierer (4) ein Förderband (25), eine Erkennungseinrichtung (26) und eine Austragsvorrichtung (27) aufweist, **dadurch gekennzeichnet, daß** zwischen der die Abfallobjekte aufnehmenden Förderfläche (28) eines Förderbandes (25) und der die Abfallobjekte aufnehmenden Förderfläche (29) des nachgeschalteten Förderbandes (25) ein vertikaler Abstand von 50 bis 450 mm vorgesehen ist.

8. Einrichtung nach Anspruch 7, **dadurch gekennzeichnet, daß** die Siebstufe durch ein erstes Trommelsieb (1) mit einer Sieblochgröße im Bereich von 180 bis 320 mm und einem diesem nachgeschalteten zweiten Trommelsieb (2) mit einer Sieblochgröße im Bereich von 80 bis 160 mm ausgebildet ist.

9. Einrichtung nach Anspruch 7 oder 8, **dadurch gekennzeichnet, daß** die Erkennungseinrichtungen (26) mit Mitteln zur Nahinfrarotdetektion und/oder Bilderkennung versehen ist.

10. Einrichtung nach einem der Ansprüche 7 bis 9, **dadurch gekennzeichnet, daß** den Sortierern (4) zur Abscheidung von folienartigen Leichtstoffen zumindest teilweise Sichter (11, 12) nachgeschaltet sind.

11. Einrichtung nach einem der Ansprüche 7 bis 10, **dadurch gekennzeichnet, daß** den Sortierern (4) zur Abscheidung von feinteiligen Inertstoffen zumindest teilweise Siebe (16, 17) nachgeschaltet sind.

## Claims

1. Method for sorting a mixture of waste in which the mixture of waste is screened to divide it into a coarse fraction, a medium-sized fraction and a fine fraction, the medium-sized fraction is divided into lightweight and heavy materials by pneumatic sifters and in a first lane the heavy material is divided into heavy material fractions and in a second lane the fine fraction is divided into sorting fractions, **characterised in that** first of all the heavy material fractions drinks cartons, PE, PP, PET and lastly the heavy material fraction PPK and mixed plastics are separated out in steps one after another from the heavy material and PE and PP from the fine fraction in steps one after another using automatic sorters arranged in a lane one behind the other, waste items from the heavy material and the fine fraction which have not been separated out being ejected by the respective sorter to a subsequent one with a drop of 50 to 450 mm.

2. Method according to claim 1, **characterised in that** the waste mixture is split by a first screen perforation size in the range from 180 to 320 mm and a second screen perforation size in the range from 80 to 160 mm.

3. Method according to claim 1 or 2, **characterised in that** the items of waste in the heavy material fractions and the sorted fractions are identified by means of NIR-spectroscopy and/or image recognition and separated out by pneumatic discharge into the sorters.

4. Method according to one of claims 1 to 3, **characterised in that** the items of waste in the heavy material fractions PE and PP are sifted in sifters to separate out film-type lightweight materials and then optionally screened through perforated sheets to separate out fine particle impurities.

5. Method according to one of claims 1 to 4, **characterised in that** the items of waste from the sorting fractions PE and PP are screened through further perforated sheets to separate out small particle fine material and then sifted in sifters to separate out lightweight materials.

6. Method according to claim 4 and 5, **characterised in that** sorting fractions and heavy material fractions containing the same material are routed together in one sifter respectively.

7. Device for sorting a mixture of waste with a screening stage (1, 2) for splitting the mixture of waste into a coarse fraction, a medium-sized fraction and a fine fraction, a pneumatic sifter (3) to divide the medium-sized fraction into lightweight material and heavy material and sorters (4) arranged one after the other to separate out heavy material fractions from the heavy material and sorters (4) arranged one after the other to separate out sorting fractions from the fine fraction, whereby each sorter (4) has a conveyor belt (25), a detection device (26) and a discharge device (27), **characterised in that** a vertical distance of 50 to 450 mm is provided between the conveying surface (28) of a conveyor belt (25) holding the items of waste and the conveying surface (29) of the next conveyor belt (25) holding the items of waste.

8. Device according to claim 7, **characterised in that** the screening stage takes the form of a first screening drum (1) with a perforation size in the range from 180 to 320 mm and a second screening drum (2) following this with a perforation size in the range from 80 to 160 mm.

9. Device according to claim 7 or 8, **characterised in that** the detection devices (26) are provided with means for near infra-red detection and/or image detection.

10. Device according to one of claims 7 to 9, **characterised in that** the sorters (4) for separating out film-type lightweight materials are followed at least partially by sifters (11,12).

11. Device according to one of claims 7 to 10, **characterised in that** the sorters (4) for separating out very fine particle inert substances are followed at least partially by screens (16, 17).

## Revendications

1. Procédé de triage d'un mélange de déchets dans lequel le mélange de déchets est subdivisé par tamisage dans le but d'obtenir une séparation en une fraction grossière, une fraction moyenne et une fraction fine, la fraction moyenne étant séparée en un produit léger et en un produit lourd en utilisant des séparateurs pneumatiques, et le produit lourd étant trié en des fractions de produit lourd dans un premier tronçon, et la fraction fine étant triée en des fractions triées dans un deuxième tronçon, **caractérisé en ce que** à partir du produit lourd, on sépare par étapes, l'une après l'autre, initialement les fractions de produit lourd, les cartons à boisson, les PE, PP, PET et, enfin, la fraction de produit lourd formée de matière synthétique à base de PP et de matières synthétiques mélangées, et à partir de la fraction fine, on effectue un tri par étapes, l'une après l'autre, pour éliminer PE et PP, en utilisant des trieurs automatiques installés l'un derrière l'autre par tronçons, de sorte que les objets de déchet non éliminés par triage du produit lourd et de la fraction fine soient éjectés par le trieur respectif sur un trieur aval avec une hauteur de chute de 50 à 450 mm.

2. Procédé selon la revendication 1, **caractérisé en ce que** le mélange de déchets est subdivisé en utilisant une première taille de trous de tamis dans la fourchette de 180 à 320 mm et une deuxième taille de trous de tamis dans la plage de 80 à 160 mm.

3. Procédé selon la revendication 1 ou 2, **caractérisé en ce que** les objets de déchets des fractions de produit lourd et des fractions triées sont identifiés en utilisant une spectroscopie NIR ou une identification d'image et sont éliminés par triage, dans les trieurs, en utilisant une expulsion pneumatique.

4. Procédé selon l'une des revendications 1 à 3, **caractérisé en ce que** les objets de déchets des fractions de produit lourd en PE et PP sont séparés dans des séparateurs pneumatiques pour séparer les substances légères du genre en feuille et, le cas échéant, sont ensuite tamisés dans des tamis pour séparer des substances parasites finalement divisées.

5. Procédé selon l'une des revendications 1 à 4, **caractérisé en ce que** les objets de déchets des fractions triées que sont PE et PP sont d'abord tamisés dans d'autres tamis pour séparer le produit fin en petits morceaux et sont ensuite séparés dans des séparateurs pneumatiques pour séparer les substances légères.

6. Procédé selon les revendications 4 et 5, **caractérisé en ce que** les fractions triées et les fractions de produit lourd formées des mêmes matériaux sont dirigées conjointement, chaque fois dans un séparateur pneumatique.

7. Dispositif de tri d'un mélange de déchets, avec un étage de tamisage (1, 2) pour la subdivision du mélange de déchets en une fraction grossière, une fraction moyenne et une fraction fine, un séparateur pneumatique (3) pour séparer la fraction moyenne en produit léger et en produit lourd, et des trieurs (4) installés l'un derrière l'autre, pour éliminer par triage les fractions de produit lourd depuis le produit lourd, et des trieurs (4) installés l'un derrière l'autre pour éliminer par triage des fractions triées issues de la fraction fine, chaque trieur (4) présentant une bande transporteuse (25), un dispositif d'identification (26) et un dispositif d'expulsion (27), **caractérisé en ce que**, entre la face de transport (28) d'une bande transporteuse (25) supportant les objets de déchet et la face de transport (29) de la bande transporteuse (25) installée en aval qui reçoit les objets de déchet, est prévu un espacement vertical de 50 à 450 mm.

8. Dispositif selon la revendication 7, **caractérisé en ce que** un étage de tamisage est formé par un premier tamis en forme de tambour (1) ayant une taille de trous dans la fourchette de 180 à 320 mm et, installé en aval de celui-ci, un deuxième tamis en forme de tambour (2) ayant une taille de trous de tamis dans la fourchette de 80 à 160 mm.

9. Dispositif selon la revendication 7 ou 8, **caractérisé en ce que** les dispositifs d'identification (26) sont munis de moyens permettant la détection aux infra-rouges proches et/ou l'identification d'images.

10. Dispositif selon l'une des revendications 7 à 9, **caractérisé en ce que** au moins en partie des séparateurs (11, 12) sont installés en aval des séparateurs (4) prévus pour la séparation des substances légères du genre en feuille.

11. Dispositif selon l'une des revendications 7 à 10, **caractérisé en ce que** au moins en partie des tamis (16, 17) sont installés en aval des trieurs (4) pour effectuer la séparation des substances inertes en petits morceaux.
